# EUROPÄISCHE PATENTSCHRIFT

(11) **EP 3 488 310 B1**
(45) Veröffentlichungstag und Bekanntmachung des Hinweises auf die Patenterteilung: **17.11.2021**
(21) Anmeldenummer: 17749601.5
(22) Anmeldetag: 12.07.2017
(51) Int. Cl.: G05D 16/20

(54) **DRUCKMINDERER FÜR TIERTRÄNKEN**
PRESSURE REDUCER FOR ANIMAL DRINKING TROUGHS
DÉTENDEUR POUR ABREUVOIRS

(30) Priorität: 20.07.2016 DE 102016008661; 02.03.2017 DE 102017002034
(43) Veröffentlichungstag der Anmeldung: 29.05.2019
(73) Patentinhaber: LUBING Maschinenfabrik Ludwig Bening GmbH & Co. KG, 49406 Barnstorf (DE)
(72) Erfinder: VON DER ASSEN, Markus, 49439 Steinfeld (DE); MEYER, Wolfgang, 49406 Barnstorf (DE); ABELN, Michael, 49685 Halen (DE)
(74) Vertreter: Möller, Friedrich
(86) Internationale Anmeldenummer: PCT/EP2017/000825
(87) Internationale Veröffentlichungsnummer: WO 2018/015002

(56) Entgegenhaltungen:
- EP-A2- 0 277 525
- EP-A2- 2 085 852
- WO-A1-01/01215
- WO-A1-2005/095211
- DE-A1- 3 839 146
- US-A1- 2002 036 013
- US-A1- 2003 070 710

## Beschreibung

Die Erfindung betrifft einen Druckminderer gemäß dem Oberbegriff des Anspruchs 1.

Tiertränken werden üblicherweise mit einem Flüssigkeitsdruck betrieben, der geringer ist als der Leitungsdruck einer Flüssigkeitsversorgung. Druckminderer dienen dazu, den höheren Leitungsdruck der Wasserversorgung auf einen geringeren Druck zu reduzieren, der zur Versorgung der Tiertränken geeignet ist. Üblicherweise sind zumindest in größeren Ställen mehrere Tränkestränge mit einer Vielzahl von Tiertränken, insbesondere Tränkeventilen, vorgesehen, wobei in der Regel jedem Tränkestrang ein Druckminderer zugeordnet ist. Dadurch befinden sich in größeren Ställen mehrere, vorzugsweise gleiche Druckminderer.

Ein Spülen der Tränkestränge mit den Tränkestellen erfolgt mit dem vollen Leitungsdruck der Flüssigkeitsversorgung. Dazu müssen die Druckminderer so verstellbar sein, dass sie den Leitungsdruck der Flüssigkeitsversorgung zum Spülen nicht verringern. Aber auch im Tränkenbetrieb müssen die Druckminderer aus verschiedenen Gründen verstellbar sein.

Es sind in der Praxis Druckminderer bekannt, die manuell verstellt werden. Das ist sehr aufwendig, weil dazu der Stall betreten werden muss. Dieser Aufwand erhöht sich noch, wenn in größeren Ställen mehrere Druckminderer vorhanden sind. Außerdem ist es schwierig, manuell den jeweiligen Druckminderer exakt auf den gewünschten verringerten Flüssigkeitsdruck an den Tränkestellen einzujustieren. Um diese Nachteile zu beseitigen, ist es auch schon bekannt, Druckminderer pneumatisch zu verstellen. Das erfordert eine Druckluftversorgung und ein Netz mit Druckluftleitungen, das bei größeren Ställen mit einer Vielzahl von Druckminderern aufwendig ist.

Aus der WO 2005/095211 A1 ist eine Einrichtung zur Aufrechterhaltung eines Flüssigkeitspegels in einem Pflanzbehälter bekannt. Dieser Einrichtung kann ein Druckminderer vorgeordnet sein. Es ist jedoch auch nicht offenbart, ob und ggf. wie der Druckminderer verstellbar sein könnte.

Die DE 38 39 146 A1 offenbart ein pilotgesteuertes Gasdruckregelgerät zum Einbau in ein Gasversorgungsnetz. Der Gasstrom wird bei diesem Gasdruckregelgerät durch eine Stellmembram mit einem Stellglied geregelt.

Die US 2002/036013 A1 und US 2003/0070710 A1 offenbaren eine Einrichtung zum Regulieren des Sauerstoffdrucks zum Schweißen. Der gewünschte Sauerstoffdruck kann eingestellt werden durch elektrisch betätigbare Ventile.

Die WO 01/01215 A1 offenbart einen Druckminderer für Fluide mit einer Einrichtung zur Durchflussmessung. Diese Einrichtung verfügt über ein Ventil, das mit einer Membran gekoppelt ist. Die Membran ist durch eine Druckfeder im das Ventil schließendem Sinne vorgespannt. Die Stellung des Ventils ist sensorisch ermittelbar. Anhand der ermittelten Stellung des Ventils wird in Verbindung mit einer Messung des höheren Eingangsdrucks und des reduzierten Ausgangsdrucks des Druckminderers der Durchfluss des Gases durch den Druckminderer über einen Rechner mit einem gespeicherten Programm ermittelt. Zusätzlich ist der vom Druckminderer reduzierte Druck des Fluids kontrollierbar.

Der Erfindung liegt die Aufgabe zugrunde, einen Druckminderer für Tiertränken und ein Verfahren zum Verstellen mindestens eines Druckminderers für Tiertränken zu schaffen, die bei einer einfachen Bedienung und nur einem geringen apparativen Aufwand eine exakte Einstellung zulassen.

Ein Druckminderer zur Lösung dieser Aufgabe weist die Merkmale des Anspruchs 1 auf. Bei diesem Druckminderer ist es vorgesehen, dass seine Reguliereinrichtung mit der Flüssigkeit der Flüssigkeitsversorgung betätigbar und/oder verstellbar ist. Es wird somit die Energie des Drucks der Flüssigkeit der Flüssigkeitsversorgung verwendet, um die Reguliereinrichtung des Druckminderers zu betätigen bzw. zu verstellen. Dadurch kann eine automatische Veränderung des Drucks der Flüssigkeitsversorgung der Tiertränken ohne eine zusätzliche Energiequelle, insbesondere ohne Druckluft, erfolgen.

Bei diesem Druckminderer ist wenigstens ein Mittel zum Messen einer Kraft und/oder eines mechanischen Drucks (Kraftmessmittel) zwischen der Reguliereinrichtung und einer von dieser beeinflussten Membran vorgesehen. Vom Kraftmessmittel kann vorzugsweise laufend ermittelt werden, mit welcher Kraft die Reguliereinrichtung auf die Membran wirkt, insbesondere gegen die Membran drückt. Diese Kraft ist proportional zum im Druck veränderten, insbesondere reduzierten Druck der Flüssigkeit für die Tiertränke. Das führt dazu, dass vom Flüssigkeitsdruck die Reguliereinrichtung gezielt so verstellt bzw. eingestellt werden kann, dass die vom mindestens einen Kraftmessmittel gemessene Kraft einer Sollkraft entspricht, die proportional zum gewünschten reduzierten Druck der Flüssigkeit für die Tiertränke ist, den der Druckminderer erzeugen soll.

Es sind auch eine Steuerung und/oder Regelung vorgesehen, in die der gewünschte Solldruck der den Tiertränken zuzuführenden Flüssigkeit eingebbar ist. Der Steuerung und/oder Regelung sind die vom Kraftmessmittel erfassten Messwerte zuführbar und durch einen Vergleich der Messwerte mit dem Sollwert das mindestens eine Ventil im Zulaufkanal sowie das wenigstens eine Ventil im Abflusskanal der Reguliereinrichtung entsprechend steuer- und/oder regelbar. Dadurch kann die Reguliereinrichtung betätigt vom Flüssigkeitsdruck, der von den Ventilen einstellbar bzw. regulierbar ist, so verstellt werden, dass der gewünschte Solldruck der den Tränkeventilen zuzuführenden Flüssigkeit erreicht wird.

Außerdem ist es vorgesehen, dass die Reguliereinrichtung mindestens ein hydraulisch vorspannbares Federorgan aufweist. Beim Federorgan kann es sich um beispielsweise wenigstens eine Druckfeder handeln. Das Federorgan wirkt von derjenigen Seite des Gehäuses, der die Reguliereinrichtung zugeordnet ist, auf die Membran ein. Vorzugsweise drückt das mindestens eine Federorgan gegen die von der Flüssigkeitskammer weggerichtete Seite der Membran. Durch die Reguliereinrichtung ist die Vorspannung des Federorgans bedarfsgerecht veränderbar und dadurch die Membran entsprechend vorspannbar, wodurch ein in die Flüssigkeitskammer mündendes Regulierventil zur Reduzierung des Flüssigkeitsdrucks mit mehr oder weniger großer Kraft von der Membran betätigt wird.

Bevorzugt sind der Reguliereinrichtung mindestens ein Zulaufkanal für im Druck noch nicht reduzierter Flüssigkeit der Flüssigkeitsversorgung, insbesondere einer Speisewasserleitung, sowie mindestens ein Abflusskanal für Flüssigkeit von der Reguliereinrichtung zugeordnet. Der Zulaufkanal und der Abflusskanal führen einerseits zur Reguliereinrichtung und andererseits von derselben weg. Außerdem stehen der Zulauf- und der Abflusskanal miteinander in Verbindung. Sie kommunizieren dadurch miteinander. Durch den Zulaufkanal kann die Flüssigkeit von der Flüssigkeitsversorgung, insbesondere im Druck noch nicht reduzierte Flüssigkeit, der Reguliereinrichtung zugeführt werden. Der Druck dieser Flüssigkeit kann dadurch zum Einstellen bzw. Verstellen der Reguliereinrichtung verwendet werden.

Es ist des Weiteren bevorzugt vorgesehen, dem Zulaufkanal und dem Abflusskanal jeweils ein Ventil zuzuordnen. Beim jeweiligen Ventil handelt es sich bevorzugt um ein steuerbares Ventil, beispielsweise ein elektrisch steuerbares Magnetventil.

Die Ventile im Zulauf- und Abflusskanal ermöglichen es, die zur Reguliereinrichtung strömende Flüssigkeit und auch die von der Reguliereinrichtung abfließende Flüssigkeit gezielt zu steuern und/oder zu regeln. Dadurch kann von der Reguliereinrichtung die Druckreduzierungsrate des Druckminderers in der gewünschten Weise den Anforderungen entsprechend ver- bzw. eingestellt werden und gegebenenfalls auch zum Spülen der jeweiligen Tiertränke der Druckminderer temporär so eingestellt werden, dass keine Druckreduktion erfolgt.

Bevorzugt ist einem der Membran weggerichteten Ende des Federorgangs ein Kolben zugeordnet. Mit diesem Kolben korrespondiert ein Zylinder, der insbesondere mit dem Gehäuse verbunden ist. Durch eine Verlagerung des Kolbens im Zylinder wird das Federorgan mehr oder weniger stark vorgespannt und/oder zusammengedrückt. Dadurch kann eine hydraulische Veränderung der Vorspannung des Federorgans der Reguliereinrichtung erfolgen. Als Hydraulikfluid dient dabei Flüssigkeit, die dem Zylinder durch den Zulaufkanal zuführbar ist, also der vom Druckminderer noch nicht reduzierte Druck der Flüssigkeitsversorgung. Der Zulaufkanal mündet im Zylinder, wo er einen Druck aufbauen kann, der zum gewünschten Verschieben des Kolbens im Zylinder führt und dadurch das Federorgan der Reguliereinrichtung stärker vorspannt. Soll die Vorspannung des Federorgans verringert werden, wird aus dem Zylinder Flüssigkeit über den Abflusskanal abgeleitet. Diese aus dem Zylinder abgeführte Flüssigkeit gelangt über den Abflusskanal vorzugsweise in die Flüssigkeitskammer auf der dem Zylinder mit dem Kolben und auch dem Federorgan weggerichteten Rückseite bzw. Unterseite der Membran.

Ein bevorzugtes Ausführungsbeispiel der Erfindung wird nachfolgend anhand der Zeichnung näher erläutert. In dieser zeigen:
- Fig. 1: eine schematische Seitenansicht einer Tiertränke, und
- Fig. 2: einen schematischen mittigen Schnitt durch einen Druckminderer der Tiertränke der Fig. 1.

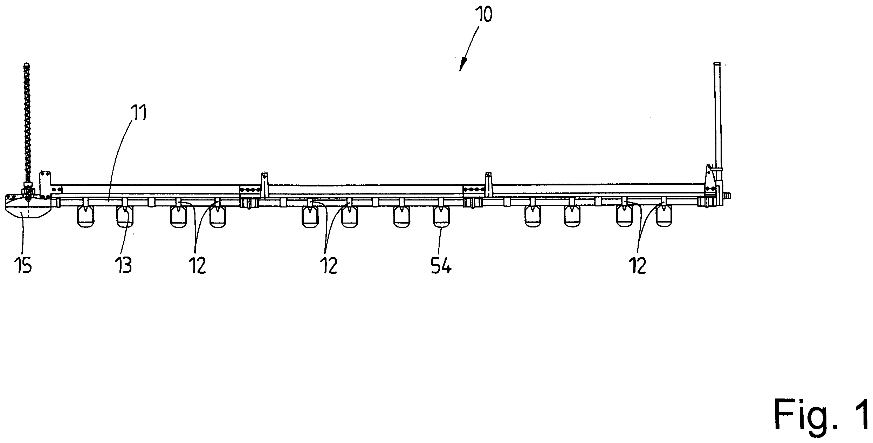

In der Fig. 1 ist eine als Strangtränke 10 ausgebildete Tiertränke dargestellt. Die Tiertränke 10 ermöglicht es Tieren, beispielsweise Kleintieren wie Geflügel, ihren Wasserbedarf selbsttätig zu decken.

Die Strangtränke 10 wird beispielsweise an in den Figuren nicht gezeigten Seilen im Stall aufgehängt, und zwar mit einem der Größe der Tiere entsprechenden Abstand vom Stallboden, so dass die Tiere die Strangtränke 10 bequem erreichen können.

Die Strangtränke 10 verfügt über einen Tränkestrang mit einer länglichen, geradlinigen Flüssigkeitsleitung 11. Die Flüssigkeitsleitung 11 kann einstrangig, aber auch mehrstrangig, als Flüssigkeitsumlaufleitung ausgebildet sein. Die Flüssigkeitsleitung 11 ist mit Flüssigkeit aus einer Flüssigkeitsversorgung speisbar. Bei der Flüssigkeit kann es sich um reines Wasser, insbesondere Leitungswasser, aber auch aufbereitetes Wasser, handeln. Beispielsweise kann das Wasser mit Nährstoffen und/oder Arzneimitteln versehen sein.

Die Flüssigkeitsleitung 11 des gezeigten Tränkestrangs ist mit einer Mehrzahl von im Abstand voneinander angeordneten und vorzugsweise untereinander gleichen Tränkeventilen 12 versehen. Die Tränkeventile 12 können beispielsweise von unten in die Flüssigkeitsleitung 11 eingeschraubt sein, und zwar so, dass sie teilweise unten aus der Flüssigkeitsleitung 11 herausragen. Die an sich bekannten Tränkeventile 12 verfügen über mindestens einen Ventilstift und einen darunter angeordneten Betätigungsstift 13. Ein unterer Betätigungsbereich des Betätigungsstifts 13 ragt nach unten aus einem Gehäuse 14 des Tränkeventils 12 heraus. Dieser untere, freie Betätigungsabschnitt des Betätigungsstifts 13 ist für die Tiere, insbesondere ihre Schnäbel, zugänglich. Die Tiere können mit dem unteren Betätigungsende den Betätigungsstift 13 verkippen oder anheben zum Öffnen des jeweiligen Tränkeventils 12. Nach dem Loslassen des Betätigungsstifts 13 kehrt dieser wieder in seine Ausgangslage zurück, wodurch das Tränkeventil automatisch und selbsttätig schließt.

Bei der gezeigten Strangtränke 10 sind den Tränkeventilen 12 Wasserauffangschalen 54 zugeordnet. Diese brauchen nicht zwingend vorgesehen zu sein.

Üblicherweise sind mehrere gleich lange oder auch unterschiedlich lange Strangtränken 10 in einem Stall angeordnet. Bei größeren Ställen, die in mehrere Abteile für jeweils eine Gruppe von Tieren unterteilt sind, befindet sich in jedem Abteil des Stalls mindestens eine Strangtränke 10.

Die Strangtränke 10 ist mit einem Druckminderer 15 versehen. Bei der Darstellung gemäß der Fig. 1 ist der Druckminderer 15 dem linken Ende des Flüssigkeitsstrangs 11 zugeordnet, und zwar entweder hieran angeschlossen und/oder hiermit verbunden.

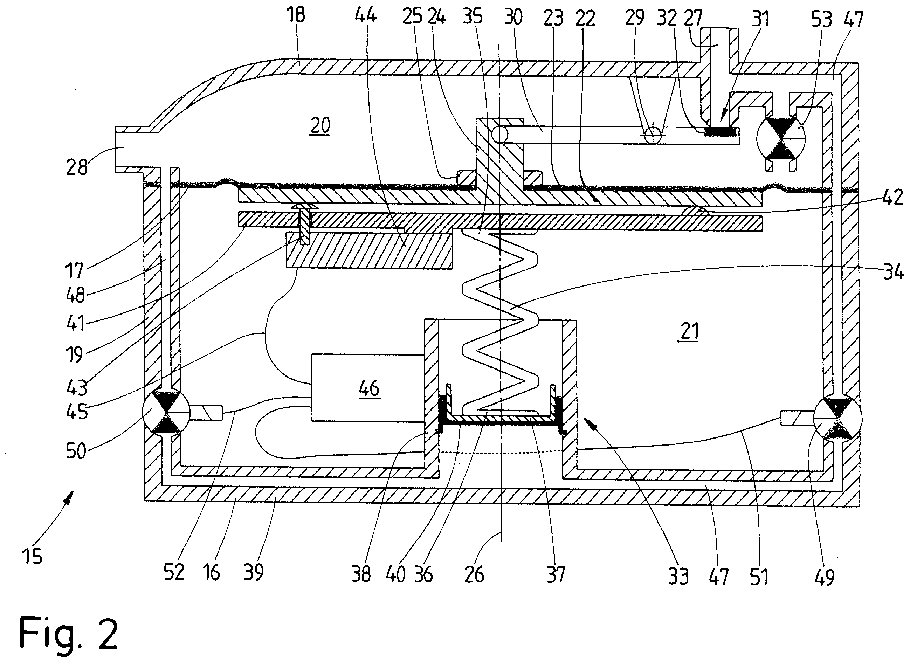

Der in der Fig. 2 detailliert im Schnitt dargestellte Druckminderer 15 ist in erfindungsgemäß besonderer Weise ausgebildet, nämlich hinsichtlich seiner Druckminderungsrate veränderlich. Für die nachfolgende Beschreibung wird als Druckminderungsrate, das Verhältnis zwischen dem größeren Flüssigkeitsdruck der Flüssigkeitsversorgung zum geringeren, vom Druckminderer 15 reduzierten Flüssigkeitsdruck bezeichnet.

Der Druckminderer 15 verfügt über ein geschlossenes Gehäuse 16 aus vorzugsweise Kunststoff. Das Gehäuse 16 ist bevorzugt mehrteilig ausgebildet, beispielsweise aus zwei vorzugsweise flüssigkeitsdicht miteinander verbundenen Gehäuseteilen. Unterteilt ist das Innere des Gehäuses 16 des Druckminderers 15 durch eine elastische Membran 17. Beispielsweise kann die Membran 17 sich zwischen den beiden Gehäuseteilen, und zwar einem Gehäuseoberteil 18 und einem Gehäuseunterteil 19, befinden. Beim Verbinden, vorzugsweise Verschrauben, des Gehäuseoberteils 18 mit dem Gehäuseunterteil 19 wird zwischen beiden die Membran 17 fixiert durch zum Beispiel Einklemmen. Dabei kann ein äußerer Umfang der Membran 17 gleichzeitig als Dichtung zwischen dem Gehäuseoberteil 18 und dem Gehäuseunterteil 19 dienen. Das Gehäuseunterteil 19 verfügt über mindestens eine kleine, in den Figuren nicht dargestellte, Be- bzw. Entlüftungsöffnung zur Vermeidung eines Druckaufbaus im Gehäuseunterteil 19. Gleichzeitig kann die mindestens eine kleine Öffnung oder Bohrung zur Ableitung von sich unter der Membran 17 bildenden Kondenswasser aus dem Gehäuseunterteil 19 dienen.

Durch die Membran 17 wird das Gehäuse 16 des Druckminderers 15 in zwei flüssigkeitsdicht voneinander getrennte Kammern unterteilt, und zwar eine auf einer Seite der Membran 17, vorzugsweise oberhalb derselben sich befindende Flüssigkeitskammer 20 im Gehäuseoberteil 18 und eine sich auf der gegenüberliegenden Seite der Membran 17 befindende Kammer 21 im Gehäuseunterteil 19.

Die Membran 17 ist mit einem Stützkörper 22 verbunden. Der Stützkörper 22 verfügt über eine dünne, ebene und stabile Stützfläche 23 sowie einen daran angeformten und nach oben ragenden Zapfen 24. Der Stützkörper 22 ist bevorzugt einstückig aus Kunststoff gebildet. Die Stützfläche 23 ist der die Kammer 21 begrenzenden Seite der Membran 17 zugeordnet, also im dargestellten Ausführungsbeispiel der Unterseite derselben. Der Zapfen 24 des Stützkörpers 22 ist durch eine zentrale Ausnehmung der Membran 17 hindurchgeführt, so dass er in die Flüssigkeitskammer 20 ragt. Durch beispielsweise einer auf den Zapfen 24 aufschraubbaren Überwurfmutter 25 ist der Stützkörper 22 mit der Membran 17 verbunden und die Ausnehmung in der Membran 17 gegenüber dem Zapfen 24 abgedichtet.

Beim Gehäuse 14 mit runder Grundfläche ist auch die Membran 17 rund, also kreisförmig ausgebildet, und zwar ebenso wie die Stützfläche 23 und der Zapfen 24 des Stützkörpers 22. Der Außendurchmesser der Stützfläche 23 ist kleiner als der Innendurchmesser des Gehäuses 16, so dass zwischen dem Gehäuseoberteil 18 und dem Gehäuseunterteil 19 eine äußere Kreisringfläche der Membran 17 freiliegt. Im Bereich dieser Kreisringfläche ist die Membran 17 elastisch rückfedernd verformbar, wodurch der Stützkörper 22 mit dem darunterliegenden inneren Teil der Membran 17 auf einer Längsmittelachse 26 des Gehäuses 16 hin- und herbewegbar, insbesondere bei der in den Fig. 1 und 2 gezeigten Lage der Strangtränke 10 auf- und abbewegbar ist.

Das Gehäuseunterteil 18 des Druckminderers 15 verfügt über einen Zulauf 27 für die im Druck zu reduzierende Flüssigkeit aus der Flüssigkeitsversorgung und einen Ablauf 28 für die im Druck reduzierte Flüssigkeit oder im Fall des Spülens nicht druckreduzierte Flüssigkeit. Der Zulauf 27 mündet in der Flüssigkeitskammer 20, die im gezeigten Ausführungsbeispiel sich oberhalb der Membran 17 befindet. Der Ablauf 28 geht von der Flüssigkeitskammer 20 aus.

Ein um eine feste Drehachse 29 in der Flüssigkeitskammer 20 des Gehäuseoberteils 18 kippbar gelagerter doppelarmiger Hebel 30 ist an einem Ende gelenkig mit dem Zapfen 24 des Stützkörpers 22 der Membran 17 verbunden und mit dem anderen, gegenüberliegenden Ende einer freien unteren Öffnung 31 des Zulaufs 27 zugeordnet. Dort, wo das dem Zulauf 27 zugeordnete Ende des doppelarmigen Hebels 30 mit der Öffnung 31 in Kontakt bringbar ist, ist der doppelarmige Hebel 30 mit einer Dichtung 32 verbunden. Wenn diese Dichtung 32 durch entsprechendes Verschwenken des doppelarmigen Hebels 30 gegen den Uhrzeigersinn dichtend auf der Öffnung 31 anliegt, verschließt sie den Zulauf 27. Das ist der Fall, wenn durch den im Inneren der Flüssigkeitskammer 20 herrschenden Flüssigkeitdruck die Membran 17 heruntergedrückt und dadurch der doppelarmige Hebel 30 gegen den Uhrzeigersinn mit einer Kraft beaufschlagt und dadurch verkippt wird. Wenn sich hingegen die Membran 17 nach oben bewegt, hebt die Dichtung 32 von der Öffnung 31 des Zulaufs 27 ab und gibt diese frei. Auf diese Weise stellen der Zulauf 27 und die seiner oberen Öffnung 31 zugeordnete Dichtung 32 des doppelarmigen Hebels 30 ein Regulierventil dar, womit gemäß der eingestellten Druckminderungsrate der höhere Flüssigkeitsdruck auf einen geringeren Flüssigkeitsdruck reduziert wird. Dieser vom Druckminderer 15 reduzierte, geringere Flüssigkeitsdruck herrscht in der gesamten Flüssigkeitskammer 20 im Gehäuseoberteil 18 vor, wodurch den Ablauf 28 Flüssigkeit mit geringerem bzw. reduzierten Druck verlässt. Diese Flüssigkeit gelangt in die Flüssigkeitsleitung 11 der Strangtränke 10, wodurch die Tränkeventile 12 mit dem vom Druckmindere 15 reduzierten geringeren Flüssigkeitsdruck beaufschlagt werden.

Zur Veränderung der Druckminderungsrate des Druckminderers 15 ist der Membran 17 eine Reguliereinrichtung 33 zugeordnet. Die Reguliereinrichtung 33 befindet sich in der Kammer 21 des Gehäuseunterteils 19 des Druckminderers 15. In dieser unteren Kammer 21, die von der Membran 17 gegenüber der oberen Flüssigkeitskammer 20 flüssigkeitsdicht abgetrennt ist, befindet sich keine Flüssigkeit, sondern im Wesentlichen nur Luft.

Die Reguliereinrichtung 33 verfügt über ein Federorgan, das im Ausführungsbeispiel der Fig. 2 als eine Druckfeder 34 ausgebildet ist. Die Druckfeder 34 stützt sich mit einem vorzugsweise oberen Ende 35 unter der Membran 17 ab. Mit einem gegenüberliegenden, unteren Ende 36 ist die Druckfeder 34 einer Zylinder-Kolbeneinheit zugeordnet. Ein beweglicher Kolben 37 der KolbenZylindereinheit ist dem unteren Ende 36 der Druckfeder 34 zugeordnet, so dass der Kolben 37 von unten gegen die Druckfeder 34 drücken kann. Der Kolben 37 ist axialbeweglich in einem Zylinder 38 gelagert, der mit einer unteren Deckwandung 39 des Gehäuseunterteils 19 verbunden ist, vorzugsweise einstückig. Der Kolben 37 ist im Zylinder 38 abgedichtet, und zwar im gezeigten Ausführungsbeispiel durch eine Rollmembran 40.

Die Druckfeder 34 ist so bemessen und ausgelegt, dass bei Ausfallen der Steuerung und/ oder Elektronik der Reguliereinrichtung 33 die Flüssigkeit mit einem maximal reduzierten Druck durch den Druckminderer 15 hindurchströmen kann zur Aufrechterhaltung einer minimalen Wasserversorgung der Tiere.

Die Reguliereinrichtung 33, insbesondere ihre Druckfeder 34, der Kolben 37 und der Zylinder 38 sind mittig bzw. zentrisch im Gehäuse 14 angeordnet, so dass ihre Längsmittelachsen auf der Längsmittelachse 26 des Druckminderers 15 liegen. Auf dieser Längsmittelachse 26 befindet sich außerdem der Stützkörper 22 mit der Stützfläche 23 und dem Zapfen 24. Dadurch wird die Kraft der Druckfeder 34 mittig auf den Stützkörper 22 und damit auch mittig auf die Membran 17 des Druckminderers 15 übertragen.

Das untere Ende 35 der Druckfeder 34 stützt sich indirekt auf dem Stützkörper 22 der Membran 17 ab, indem dieses Ende der Druckfeder 34 auf einem Teller 41 sich abstützt und/oder hieran befestigt ist. Dieser vorzugsweise der Grundfläche der Stützfläche 23 des Stützkörpers 22 entsprechende Teller 41 verfügt an einer zum Stützkörper 22 gerichteten Oberseite über mindestens drei feste Füße 42 und einen als beweglichen Fuß dienenden Stift 43. Der Stift 43 ist parallel zur Längsmittelachse 26 des Druckminderers 15 axial verschieblich im Teller 41 gelagert. Dadurch wird mindestens ein Teil der Kraft, womit der Teller 41 von der Druckfeder 34 gegen die Membran 17 gedrückt wird, auf den axialverschieblichen Stift 43 übertragen bzw. der Stift 43 mit dieser Kraft beaufschlagt.

Unter dem Teller 41 ist ein Kraftmessmittel befestigt. Hierbei kann es sich um einen beliebigen Kraftaufnehmer handeln. Beispielsweise kann es sich um einen Dehnungsmessstreifen, ein Piezoelement oder eine Kraft- bzw. Druckmessdose handeln. Der bewegliche Stift 43 ist dem Kraftmessmittel 44 derart zugeordnet, beispielsweise - aber nicht zwingend - durch Befestigung des Stifts 43 am Kraftmessmittel 44, dass die Kraft, womit die Druckfeder 34 gegen die Stützfläche 23 der Membran 17 drückt oder umgekehrt, vom Kraftmessmittel 44 erfassbar ist. Durch eine Messwertübertragungsleitung 45 ist jeder vom Kraftmessmittel 44 aufgenommene Messwert an eine in der Kammer 21 angeordnete Elektronik 46, beispielsweise eine Steuerung, übertragbar. Im gezeigten Ausführungsbeispiel ist die Elektronik 46 außen am Zylinder 38 des Gehäuses 16 befestigt. Die Elektronik 46 kann aber auch an jeder anderen Stelle angeordnet sein, bevorzugt im Gehäuse 14 und/oder innerhalb der Kammer 21, aber gegebenenfalls auch außerhalb des Gehäuses 16.

Vom Zulauf 27 zweigt vor seiner von der Reguliereinrichtung 33 bedarfsweise verschließbaren Öffnung 31 ein Zulaufkanal 47 ab. Dieser Zulaufkanal 47 mündet im Zylinder 38 der Reguliereinrichtung 33, und zwar auf der der Druckfeder 34 gegenüberliegenden Unterseite des Kolbens 37. Der Zulaufkanal 47 kann im Gehäuse 14, aber auch auf andere Weise gebildet sein, beispielsweise von einer separaten Schlauchleitung. Durch den Zulaufkanal 47 ist Flüssigkeit mit dem höheren Druck aus der Flüssigkeitsversorgung der Unterseite des Zylinders 38 zuführbar und dadurch der Kolben 37 im Zylinder 38 in Richtung zur Membran 17 bewegbar, was eine Erhöhung der Vorspannung der Druckfeder 34 zur Folge hat, wodurch die Druckminderungsrate kleiner wird, also der Eingangsdruck der Flüssigkeitsversorgung im bzw. vom Druckminderer 15 weniger stark reduziert wird.

Des Weiteren ist ein Abflusskanal 48 vorgesehen. Dieser geht vom Zylinder 38 aus und mündet in der Flüssigkeitskammer 20 oberhalb der Membran 17. Über den Abflusskanal 48 kann Flüssigkeit aus dem Zylinder 38 der Reguliereinrichtung 33 in die Flüssigkeitskammer 20, in der sich Flüssigkeit mit reduziertem Druck befindet, abfließen. Dadurch kann sich der Kolben 37 im Zylinder 38 hochbewegen zur Entlastung der Druckfeder 34, wodurch vom Druckminderer 15 der Druck der Flüssigkeitsversorgung stärker reduziert wird.

Um den Zulauf von Flüssigkeit durch den Zulaufkanal 47 und den Ablauf der Flüssigkeit durch den Abflusskanal 48 zur gewünschten Einstellung der Reguliereinrichtung 33 durch entsprechende Auf- und Abbewegung des Kolbens 37 im Zylinder 38 gezielt verändern zu können, ist sowohl im Zulaufkanal 47 als auch im Abflusskanal 48 jeweils ein Ventil angeordnet, bei dem es sich vorzugsweise um ein Magnetventil 49, 50 handelt. Vorzugsweise sind die Ventile im Zulaufkanal 47 und Abflusskanal 48 die gleichen. Von den Magnetventilen 49, 50 ist der Durchfluss von Flüssigkeit durch den Zulaufkanal 47 und den Abflusskanal 48 unabhängig voneinander individuell veränderbar. Es können die Magnetventile 49 und 50 auch unabhängig voneinander vollständig geschlossen oder vollständig geöffnet werden. Die Verstellung der Magnetventile 49 und 50 erfolgt gesteuert von der Elektronik 46 über eine dem Magnetventil 49 im Zulaufkanal 47 zugeordnete Steuerleitung 51 und eine dem Magnetventil 50 im Abflusskanal 48 zugeordnete Steuerleitung 52. Wird bei geschlossenem Magnetventil 50 im Abflusskanal 48 das Magnetventil 49 im Zulaufkanal 47 ganz oder teilweise geöffnet, strömt im Druck ungeminderte Flüssigkeit aus der Flüssigkeitsversorgung in den Zylinder 38 der Reguliereinrichtung 33. Dadurch wird der Kolben 37 im Zylinder 38 heruntergedrückt und die Druckfeder 34 stärker vorgespannt, wodurch der Druck in der Flüssigkeitskammer 20 weniger reduziert wird und somit auch der Strangtränke 10 Flüssigkeit mit einem eine geringere Druckminderungsrate aufweisenden Druck zuführbar ist. Durch ständiges Offenlassen mindestens des Magnetventils 49 im Zulaufkanal 47 wird die Druckfeder 34 so weit vorgespannt, dass die Reguliereinrichtung 33 einen im Druck ungeminderten Durchfluss der einen höheren Druck aufweisenden Flüssigkeit aus der Flüssigkeitsversorgung durch die Flüssigkeitskammer 20 des Druckminderers 15 ermöglicht. Die Druckminderungsrate ist dann "1". Das ist zum Beispiel gewünscht zum Spülen der mindestens einen Strangtränke 10, insbesondere ihrer Tränkeventile 12, welcher der Druckminderer 15 zugeordnet ist.

Damit das Spülen der mindestens einen Strangtränke noch wirksamer stattfinden kann, ist es denkbar, ein in der Fig. 2 gezeigtes zusätzliches Ventil 53 dem Zulauf 27 zuzuordnen, und zwar entweder im Zulauf 27 oder - wie in der Fig. 2 gezeigt - am Anfang des Zulaufkanals 47. Durch Öffnen des Ventils 53, was elektrisch, hydraulisch, aber auch manuell erfolgen kann, strömt auch Flüssigkeit hohen Drucks aus der Flüssigkeitsversorgung in die Kammer 20. Die Flüssigkeit kann so zwei Wege in die Flüssigkeitskammer 20 nehmen, und zwar durch das Ventil 53 und durch den von der Reguliereinrichtung 33 vollständig geöffneten Zulauf 27. Dadurch kann zum wirksamen Spülen der Strangtränke 10 und ihren Tränkeventilen 12 eine ausreichend große Menge im Druck nicht reduzierter Flüssigkeit bereitgestellt werden.

Beim Spülen der jeweiligen Strangtränke 10 kann es vorgesehen sein, die Magnetventile 49 und 50 im Zulaufkanal 47 und im Abflusskanal 48 vollständig zu öffnen und geöffnet zu halten, damit auch der Zulaufkanal 47 und der Abflusskanal 48 gespült werden können. Außerdem ist dabei die Öffnung 31 des Zulaufs 27 permanent vollständig freigegeben, wodurch die Flüssigkeitskammer 20 auch mit dem hohen Druck aus der Flüssigkeitsversorgung durchströmt wird.

Soll die eingestellte Druckminderungsrate beibehalten werden, sind beide Magnetventile 49, 50 geschlossen. Zur Vergrößerung der Druckminderungsrate muss die Druckfeder 34 entlastet werden. Dazu wird nur das Magnetventil 50 im Abflusskanal 48 mindestens teilweise geöffnet, so dass eine entsprechende Menge an Flüssigkeit aus dem Zylinder 38 abfließen kann in die Flüssigkeitskammer 20, worin sich Flüssigkeit reduzierten Drucks befindet. Infolge der aus dem Zylinder 38 entweichenden Flüssigkeit wandert der Kolben 37 im Zylinder 38 nach unten, wodurch eine Entlastung der Druckfeder 34 stattfindet. Dadurch kann die Membran 17 sich weiter nach unten bewegen. Die Folge ist, dass vom Druckminderer 15 der Druck der Flüssigkeit der Flüssigkeitsversorgung stärker reduziert wird, also eine größere Druckminderungsrate entsteht. Umgekehrt wird vorgegangen, wenn die Druckminderungsrate verringert werden soll. Dann wird nur das Magnetventil 49 mindestens teilweise geöffnet, wodurch über den Zulaufkanal 47 Flüssigkeit mit nicht reduziertem höheren Druck in den Zylinder 38 gelangen und dadurch den Kolben 37 einen gewünschten Weg hochdrücken kann. Dadurch wird die Druckfeder 34 der Reguliereinrichtung 33 stärker vorgespannt, was eine abnehmende Druckreduzierung und geringere Druckminderungsrate zur Folge hat.

Das erfindungsgemäße Verfahren ermöglicht eine Verstellung des Druckminderers 15 unter Zuhilfenahme des höheren Drucks der Flüssigkeit aus der Flüssigkeitsversorgung. Dieser Flüssigkeitsdruck liefert so die Energie zum Verstellen der Reguliereinrichtung 33 des Druckminderers 15. Der Druckminderer 15 ist somit hinsichtlich des zur Verstellung seiner Druckminderungsrate benötigten Antriebs und/oder seiner benötigten Energie autark. Der Antrieb bzw. die Energie zum Verstellen des Druckminderers 15 stammt von der ohnehin an den Druckminderer 15 angeschlossenen Flüssigkeitsversorgung, nämlich die von dieser stammenden Flüssigkeit höheren Drucks.

Weil die Reguliereinrichtung 33 des Druckminderers 15 mit der im Druck zu reduzierenden Flüssigkeit arbeitet bzw. von dieser betrieben wird, haben Ausfälle oder Störungen in der Steuerung des Druckminderers 15, insbesondere der Reguliereinrichtung 33 derselben, keinen Einfluss auf die Funktion des Druckminderers 15. Der Druckminderer 15 arbeitet weiterhin zuverlässig mit der zuletzt erfolgten Einstellung der Reguliereinrichtung 33. Diese kann lediglich bis zur Behebung der Störung nicht mehr automatisch verstellt werden. Es ist aber denkbar, dem Druckminderer 15 eine manuelle Verstellmöglichkeit zuzuordnen, so dass bei Ausfall oder Störung der automatischen Steuerung des Druckminderers 15 eine manuelle Veränderung der Druckminderungsrate möglich ist.

Das Verfahren sieht es weiter vor, den Druckminderer 15 oder auch gleichzeitig mehrere Druckminderer 15 gemäß einem zeitabhängigen Profil zu verstellen. Diese Verstellung erfolgt so, dass über die Zeit, vorzugsweise in wählbaren, vorgegebenen Zeitabständen, die Druckminderungsrate verändert wird, insbesondere an die jeweiligen Bedürfnisse der Tiere angepasst wird. Es kann sich dabei um mindestens ein tageszeitabhängiges Druckminderungsprofil handeln, indem beispielsweise nachts, wenn der Wasserbedarf der Tiere geringer ist, der Flüssigkeitsdruck stärker reduziert wird als zum Beispiel am Morgen, wenn die Tiere beginnen, ihren Flüssigkeitsbedarf zu decken und dadurch mehr Flüssigkeit benötigt wird. Es ist aber auch denkbar, den mindestens einen Druckminderer 15 über einen längeren Zeitraum hinweg zeitabhängig zu steuern, beispielsweise über die gesamte Mastzeit von Masttieren, indem zu Anfang der Mast, wenn die Tiere noch relativ klein sind, der Druck stärker reduziert wird als am Ende der Mast, wenn die gewachsenen Tiere einen größeren Wasserbedarf haben. Es wird dann praktisch der Druck mit zunehmendem Alter der Tiere weniger stark reduziert. Schließlich ist es auch denkbar, die Druckminderungsrate automatisch in Abhängigkeit von der Stalltemperatur und/oder der Flüssigkeitstemperatur zu verändern. Bei höherer Temperatur im Stall wird der Flüssigkeitsdruck weniger stark reduziert, sodass mehr Flüssigkeit den Tieren im Stall zur Verfügung gestellt wird. Gleiches kann bei einer höheren Flüssigkeitstemperatur gelten.

Das Verfahren sieht es alternativ oder zusätzlich vor, bei Ställen mit mehreren Strangtränken 10 und mehreren Druckminderern 15 alle oder mindestens einige ausgewählte Druckminderer 15 unabhängig voneinander individuell zu steuern. So können die den Strangtränken 10 zugeordneten Gruppen von Tieren individuell mit Flüssigkeit versorgt werden, indem beispielsweise die Strangtränken 10 für ältere Tiere mit im Druck weniger reduzierter Flüssigkeit versorgt werden, während Strangtränken 10 für Gruppen mit jüngeren Tieren mit im Druck stärker reduzierter Flüssigkeit versorgt werden.

Denkbar ist es auch, dem Ablauf 28 der Flüssigkeitskammer 20 oder in einer Leitung vom Ablauf 28 zur jeweiligen Strangtränke 10 einen Messwertgeber, insbesondere einen Drucksensor vorzusehen, der den tatsächlichen Druck der vom Druckminderer 15 reduzierten Flüssigkeit zur Versorgung der jeweiligen Strangtränke 10 misst, vorzugsweise kontinuierlich. Die Druckmesswerte werden dann an die Steuerung der Tiertränke und/oder des Druckminderers 15 übertragen. Dadurch kann eine Überprüfung dahingehend erfolgen, ob der vom Druckminderer 15 reduzierte Druck der Flüssigkeit zur Versorgung der jeweiligen Strangtränke 10 tatsächlich dem Solldruck entspricht. Bei Abweichungen können Korrekturen vorgenommen oder Korrekturwerte ermittelt werden, die für zukünftige Steuerungen oder Regelungen der Druckminderungsrate des jeweiligen Druckminderers 15 herangezogen werden.

### Bezugszeichenliste

| | | | |
|---|---|---|---|
| 10 | Strangtränke | 42 | Fuß |
| 11 | Flüssigkeitsleitung | 43 | Stift |
| 12 | Tränkeventil | 44 | Kraftmessmittel |
| 13 | Betätigungsstift | 45 | Messwertübertragungsleitung |
| 14 | Gehäuse | 46 | Elektronik |
| 15 | Druckminderer | 47 | Zulaufkanal |
| 16 | Gehäuse | 48 | Abflusskanal |
| 17 | Membran | 49 | Magnetventil |
| 18 | Gehäuseoberteil | 50 | Magnetventil |
| 19 | Gehäuseunterteil | 51 | Steuerleitung |
| 20 | Flüssigkeitskammer | 52 | Steuerleitung |
| 21 | Kammer | 53 | Ventil |
| 22 | Stützkörper | 54 | Wasserauffangschale |
| 23 | Stützfläche | | |
| 24 | Zapfen | | |
| 25 | Überwurfmutter | | |
| 26 | Längsmittelachse | | |
| 27 | Zulauf | | |
| 28 | Ablauf | | |
| 29 | Drehachse | | |
| 30 | doppelarmiger Hebel | | |
| 31 | Öffnung | | |
| 32 | Dichtung | | |
| 33 | Reguliereinrichtung | | |
| 34 | Druckfeder | | |
| 35 | Ende (oberes) | | |
| 36 | Ende (unteres) | | |
| 37 | Kolben | | |
| 38 | Zylinder | | |
| 39 | obere Deckwandung | | |
| 40 | Rollmembran | | |
| 41 | Teller | | |

## Patentansprüche

1. Druckminderer (15) für Tiertränken mit einem Gehäuse (16), in dem eine Membran (17) vorgesehen ist, die das Gehäuse (14) in eine Flüssigkeitskammer (20) für Flüssigkeit zur Versorgung der Tiertränke und eine Kammer (21) mit einer auf die Membran (17) einwirkenden verstellbaren Reguliereinrichtung (33) unterteilt und mit einem von der Membran (17) betätigbaren Regulierventil, das einem in der Flüssigkeitskammer (20) mündenden Zulauf (27) für Flüssigkeit aus einer Flüssigkeitsversorgung zugeordnet ist, wobei die Reguliereinrichtung (33) mit der Flüssigkeit der Flüssigkeitsversorgung verstellbar ist, **dadurch gekennzeichnet, dass** ein Kraftmessmittel zum Messen einer Kraft oder eines mechanischen Drucks zwischen der Reguliereinrichtung (33) und der Membran (17) vorgesehen ist, eine Steuerung vorgesehen ist, in die der gewünschte Solldruck der den Tiertränken zuzuführenden Flüssigkeit eingebbar ist, der Steuerung vom Kraftmessmittel erfasste Messwerte zuführbar sind und von der Steuerung das Ventil im Zulaufkanal (47) und das Ventil im Abflusskanal (48) entsprechend dem vorgegebenen Solldruck steuerbar und/oder regelbar sind, und dass die Reguliereinrichtung (33) mindestens eine hydraulisch vorspannbare Druckfeder (34) aufweist, die gegen die Membran (17) drückt.

2. Druckminderer nach Anspruch 1, **gekennzeichnet durch** einen Zulaufkanal (47) für Flüssigkeit der Flüssigkeitsversorgung zur Reguliereinrichtung (33) und einen Abflusskanal (48) für Flüssigkeit von der Reguliereinrichtung (33).

3. Druckminderer nach Anspruch 1 oder 2, **dadurch gekennzeichnet, dass** dem Zulaufkanal (47) und dem Abflusskanal (48) jeweils ein Ventil, vorzugsweise ein elektrisch steuerbares Magnetventil (49, 50), zugeordnet ist.

4. Druckminderer nach Anspruch 1, **dadurch gekennzeichnet, dass** einem zur Membran (17) weisenden Ende (35) des Federorgans ein Teller (41) zugeordnet ist und das Federorgan mit diesem Teller (41) sich an der Membran (17) abstützt.

5. Druckminderer nach Anspruch 4, **dadurch gekennzeichnet, dass** dem Teller (41) mindestens ein darin frei axial beweglicher Stift (43) zugeordnet ist, der sich mit einem Ende an bzw. unter der Membran (17) abstützt und mit seinem anderen, gegenüberliegenden Ende am mit dem Teller (41) vorzugsweise verbundenen Kraftmessmittel einwirkt, vorzugsweise mit dem Kraftmessmittel verbunden ist.

6. Druckminderer nach einem der Ansprüche 1 bis 5, **dadurch gekennzeichnet, dass** einem von der Membran (17) abgewandten Ende (36) des Federorgans ein Kolben (37) zugeordnet ist, womit ein in der Kammer (21) angeordneter und insbesondere mit dem Gehäuse (17) verbundener Zylinder (38) korrespondiert, wobei vorzugsweise der Kolben (37) im Zylinder (38) beweglich gelagert ist.

7. Druckminderer nach Anspruch 6, **dadurch gekennzeichnet, dass** mit einer freien Kolbenseite des Zylinders (38) der Zulaufkanal (47) und der Abflusskanal (48) flüssigkeitsführend verbunden sind, wobei vorzugsweise die dem Zulaufkanal (47) und dem Abflusskanal (48) zugeordneten Ventile in Strömungsrichtung der Flüssigkeit durch den Zulaufkanal (47) und den Abflusskanal (48) gesehen vor dem Zylinder (38) im Zulaufkanal (47) und hinter dem Zylinder (38) im Abflusskanal (48) angeordnet sind.

8. Druckminderer nach Anspruch 6 oder 7, **dadurch gekennzeichnet, dass** der vom Zylinder (38) ausgehende Abflusskanal (48) in der Flüssigkeitskammer (20) endet und/oder mündet.

## Claims

1. A pressure reducer (15) for animal drinking troughs, comprising a housing (16) in which a membrane (17) is provided, said membrane dividing the housing (14) into a liquid chamber (20) for liquid for supplying the animal drinking troughs and a chamber (21) with an adjustable regulating device (33) acting on the membrane (17) and with a regulating valve which is actuatable by the membrane (17) and is assigned to an inlet (27), opening in the liquid chamber (20), for liquid from a liquid supply, wherein the regulating device (33) is adjustable with the liquid of the liquid supply, **characterized in that** a force-measuring means for measuring a force or a mechanical pressure is provided between the regulating device (33) and the membrane (17), a controller is provided, into which the desired intended pressure of the liquid to be supplied to the animal drinking troughs can be input, measured values detected by the force-measuring means can be supplied to the controller, and the valve in the inlet channel (47) and the valve in the outflow channel (48) can be controlled and/or can be regulated by the controller in accordance with the predetermined intended pressure, and that the regulating device (33) has at least one hydraulically pre-stressable compression spring (34) which presses against the membrane (17).

2. The pressure reducer as claimed in claim 1, **characterized by** an inlet channel (47) for liquid of the liquid supply to the regulating device (33) and an outflow channel (48) for liquid from the regulating device (33).

3. The pressure reducer as claimed in claim 1 or 2, **characterized in that** the inlet channel (47) and the outflow channel (48) are each assigned a valve, preferably an electrically controllable solenoid valve (49, 50).

4. The pressure reducer as claimed in claim 1, **characterized in that** a disk (41) is assigned to an end (35) of the spring member that faces the membrane (17), and the spring member is supported on the membrane (17) by said disk (41).

5. The pressure reducer as claimed in claim 4, **characterized in that** the disk (41) is assigned at least one pin (43) which is movable axially freely therein and is supported at one end on or under the membrane (17) and acts at its other, opposite end on the force-measuring means, which is preferably connected to the disk (41), and is preferably connected to the force-measuring means.

6. The pressure reducer as claimed in one of claims 1 to 5, **characterized in that** an end (36) of the spring member that faces away from the membrane (17) is assigned a piston (37) with which a cylinder (38) which is arranged in the chamber (21) and is in particular connected to the housing (17) corresponds, wherein the piston (37) is preferably mounted movably in the cylinder (38).

7. The pressure reducer as claimed in claim 6, **characterized in that** the inlet channel (47) and the outflow channel (48) are connected in a liquid-conducting manner to a free piston side of the cylinder (38), wherein the valves assigned to the inlet channel (47) and to the outflow channel (48) are preferably arranged upstream of the cylinder (38) in the inlet channel (47) and downstream of the cylinder (38) in the outflow channel (48), as seen in the direction of flow of the liquid through the inlet channel (47) and the outflow channel (48).

8. The pressure reducer as claimed in claim 6 or 7, **characterized in that** the outflow channel (48) emerging from the cylinder (38) ends and/or opens in the liquid chamber (20).

## Revendications

1. Réducteur de pression (15) destiné à des abreuvoirs pour animaux, ledit réducteur de pression comprenant un boîtier (16), dans lequel une membrane (17) est prévue qui divise le boîtier (14) en une chambre à liquide (20) destinée à un liquide alimentant l'abreuvoir pour animaux et en une chambre (21) pourvue d'un dispositif de régulation réglable (33) agissant sur la membrane (17), et une soupape de régulation qui peut être actionnée par la membrane (17) et qui est associée à une entrée (27) destinée au liquide provenant d'une alimentation en liquide et débouchant dans la chambre à liquide (20), le dispositif de régulation (33) étant réglable à l'aide du liquide provenant de l'alimentation en liquide, **caractérisé en ce qu'**un moyen de mesure de force destiné à mesurer une force ou une pression mécanique est prévu entre le dispositif de régulation (33) et la membrane (17), une commande est prévue dans laquelle peut être entrée la pression de consigne souhaitée du liquide alimentant les abreuvoirs pour animaux, des valeurs de mesure acquises par le moyen de mesure de force peuvent être amenées à la commande et la soupape dans le canal d'alimentation (47) et la soupape dans le canal d'évacuation (48) peuvent être commandées et/ou régulées par la commande en fonction de la pression de consigne spécifiée, et **en ce que** le dispositif de régulation (33) comporte au moins un ressort de compression (34) précontraint hydrauliquement qui presse contre la membrane (17).

2. Réducteur de pression selon la revendication 1, **caractérisé par** un canal d'admission (47) destiné au liquide d'alimentation en liquide du dispositif de régulation (33) et un canal d'évacuation (48) destiné au liquide du dispositif de régulation (33).

3. Réducteur de pression selon la revendication 1 ou 2, **caractérisé en ce que** le canal d'admission (47) et le canal d'évacuation (48) sont chacun associés à une vanne, de préférence une électrovanne commandable électriquement (49, 50).

4. Réducteur de pression selon la revendication 1, **caractérisé en ce qu'**une extrémité (35) de l'élément à ressort, qui est dirigée vers la membrane (17), est associée à un disque (41) et l'élément à ressort pourvu de ce disque (41) prend appui sur la membrane (17).

5. Réducteur de pression selon la revendication 4, **caractérisé en ce que** le disque (41) est associé à au moins une tige (43) qui est librement mobile axialement à l'intérieur et qui prend appui par une extrémité sur ou sous la membrane (17) et qui agit par son autre extrémité opposée sur le moyen de mesure de force, de préférence relié au disque (41), qui est de préférence reliée au moyen de mesure de force.

6. Réducteur de pression selon l'une des revendications 1 à 5, **caractérisé en ce qu'**une extrémité (36) de l'élément à ressort, qui est opposée à la membrane (17), est associée à un piston (37) auquel correspond un cylindre (38) disposé dans la chambre (21) et relié en particulier au boîtier (17), de préférence le piston (37) étant monté de manière mobile dans le cylindre (38).

7. Réducteur de pression selon la revendication 6, **caractérisé en ce que** le canal d'admission (47) et le canal d'évacuation (48) sont reliés fluidiquement à un côté piston libre du cylindre (38), de préférence les soupapes associées au canal d'admission (47) et au canal d'évacuation (48) étant disposées en amont du cylindre (38) dans le canal d'admission (47) et en aval du cylindre (38) dans le canal d'évacuation (48) par référence au sens d'écoulement du liquide à travers le canal d'admission (47) et le canal d'évacuation (48).

8. Réducteur de pression selon la revendication 6 ou 7, **caractérisé en ce que** le canal d'évacuation (48) partant du cylindre (38) se termine et/ou débouche dans la chambre à liquide (20).
